# EUROPÄISCHE PATENTSCHRIFT

(11) **EP 2 909 584 B1**
(45) Veröffentlichungstag und Bekanntmachung des Hinweises auf die Patenterteilung: **04.01.2017**
(21) Anmeldenummer: 13773611.2
(22) Anmeldetag: 02.10.2013
(51) Int. Cl.: G01C 21/36, G06F 3/023, G06K 9/00

(54) **KRAFTWAGEN MIT EINER EINGABEVORRICHTUNG ZUR HANDSCHRIFTERKENNUNG**
MOTOR VEHICLE HAVING AN INPUT DEVICE FOR HANDWRITING RECOGNITION
VÉHICULE À MOTEUR POURVU D'UN DISPOSITIF D'ENTRÉE DESTINÉ À LA RECONNAISSANCE D'ÉCRITURE

(30) Priorität: 19.10.2012 DE 102012020608
(43) Veröffentlichungstag der Anmeldung: 26.08.2015
(73) Patentinhaber: Audi AG, 85045 Ingolstadt (DE)
(72) Erfinder: BOUAZIZ, Tahar, 85055 Ingolstadt (DE); BETZ, Michael, 85080 Geimershein (DE)
(74) Vertreter: Brandt, Kai
(86) Internationale Anmeldenummer: PCT/EP2013/002963
(87) Internationale Veröffentlichungsnummer: WO 2014/060069

(56) Entgegenhaltungen:
- DE-A1-102005 031 656
- JP-A- 2006 163 830
- JP-A- 2012 068 706
- US-A1- 2003 038 788
- US-A1- 2007 070 045
- US-A1- 2009 256 808
- US-A1- 2012 072 013

## Beschreibung

Die Erfindung betrifft einen Kraftwagen mit einem Handschrifterkennungssystem zum Bedienen eines elektronischen Geräts des Kraftwagens, beispielsweise eines Navigationssystems oder eines Infotainmentsystems. Zu der Erfindung gehören auch eine Eingabevorrichtung mit einer Handschrifterkennung sowie ein Verfahren zum Betreiben der Eingabevorrichtung. Mittels der Eingabevorrichtung kann beispielsweise in einer Navigationsdatenbank ein Ortsname durch händisches Zeichnen von Buchstaben auf eine Eingabefläche gesucht werden.

Eine solche Eingabeeinrichtung ist beispielsweise aus der EP 1 475 693 A2 bekannt. Danach wird die von einem Benutzer gezeichnete Zeichenspur eines einzelnen Buchstabens durch eine Erfassungseinrichtung erfasst, während der Benutzer die Zeichenspur auf der Eingabefläche, beispielsweise einem Touchscreen, zeichnet. Anhand der Zeichenspur wird dann durch eine Handschrifterkennungseinrichtung eine Zeichenerkennung durchgeführt und so das von dem Benutzer gemeinte Zeichen erkannt, hier also der Buchstabe. Die auf einem Bildschirm angezeigte Zeichenspur wird dann durch den erkannten Buchstaben ersetzt. Auf diese Weise kann der Benutzer handschriftlich Buchstabe für Buchstabe den Beginn eines Ortsnamens eingeben, der dann nach Möglichkeit auf der Grundlage einer Datenbanksuche automatisch vervollständigt wird, falls der Ortname anhand der bisher eingegebenen Buchstaben eindeutig bestimmt werden kann.

US2005/0234722 A1 offenbart ein Verfahren zum Betreiben einer Eingabevorrichtung, wobei durch die Handschrifterkennungseinrichtung zu der Zeichenspur mehrere unterschiedliche Erkennungsergebnisse ermittelt werden

Problematisch bei der Verwendung von Handschrifterkennungssystemen ist, dass eine Zeichenspur nicht immer eindeutig einem bestimmten Zeichen zugeordnet werden kann. Zeichnet der Benutzer beispielsweise einen senkrechten Strich "I", so kann mit diesem Strich der Großbuchstabe I, der Kleinbuchstabe I oder auch die Zahl 1 gemeint sein. Ein Handschrifterkennungssystem gibt dann als Erkennungsergebnis dasjenige Zeichen aus, das im größten Maße mit der Zeichenspur übereinstimmt. Hat der Benutzer unsauber geschrieben und ist deshalb das Erkennungsergebnis falsch, wird unter Umständen in dem oben beschriebenen Fall die Eingabe des Benutzers automatisch zu einem Ortsnamen ergänzt, den der Benutzer gar nicht gemeint hat. Dem Benutzer ist hierbei dann nicht klar, warum die Eingabevorrichtung plötzlich diesen falschen Ortsnamen anzeigt.

Der Erfindung liegt das Problem zugrunde, in einem Kraftwagen eine übersichtliche Gerätebedienung mittels einer Handschrifterkennung zu ermöglichen.

Die Aufgabe wird durch ein Verfahren gemäß Patentanspruch 1, eine Eingabevorrichtung gemäß Patentanspruch 6 sowie einen Kraftwagen gemäß Patentanspruch 7 gelöst. Vorteilhafte Weiterbildungen der Erfindung sind durch die Unteransprüche gegeben.

Nach dem erfindungsgemäßen Verfahren wird die eigentliche Zeichenspur auf der Anzeigeeinrichtung nicht sofort gelöscht und durch den erkannten Buchstaben ersetzt. Stattdessen wird die Original-Handschrift zunächst stehen gelassen. Für den Benutzer wird so schnell klar, mit welchem der eingegebenen Zeichen die Handschrifterkennung dahingehend Schwierigkeiten hatte, dass die Zeichenspur mehrdeutig ist und deshalb mehrere unterschiedliche Erkennungsergebnisse möglich sind. Das erfindungsgemäße Verfahren sieht entsprechend vor, durch eine Anzeigeeinrichtung, beispielsweise einen Bildschirm, nach der Durchführung der Zeichenerkennung auch die Zeichenspur selbst angezeigt wird.

Gleichzeitig werden Mehrdeutigkeiten bei der Erkennung der Zeichenspur berücksichtigt. Das erfindungsgemäße Verfahren sieht vor, durch die Erkennungseinrichtung, also einer Zeichenerkennungseinrichtung zum Erkennen handschriftlich eingegebener Zeichen, zu einer mehrdeutigen Zeichenspur nicht nur dasjenige Erkennungsergebnis (also z.B. einen Buchstaben oder eine Zahl) zu ermitteln, welches die größte Übereinstimmung mit der Zeichenspur aufweist, sondern mehrere unterschiedliche Erkennungsergebnisse. In dem oben genannten Beispiel werden also zu einem vertikalen Strich "I" sowohl der Großbuchstabe I als auch der Kleinbuchstabe I, die Zahl 1 und eventuell noch der Großbuchstabe J als jeweils ein Erkennungsergebnis ermittelt. Die Anzeigeeinrichtung ist dann dazu ausgelegt, gleichzeitig sowohl die erfasste Zeichenspur selbst als auch eine auf Grundlage der unterschiedlichen Erkennungsergebnisse gebildete Trefferliste anzuzeigen.

Erfindungsgemäß wird die Trefferliste allerdings nicht direkt aus den Erkennungsergebnissen selbst gebildet. Vielmehr wird mittels einer Datenbanksuche in zumindest einer Datenbank durch eine Sucheinrichtung zu jedem der unterschiedlichen Erkennungsergebnisse zumindest ein Datenbankeintrag gesucht. Mit anderen Worten wird also nach der Erkennung einer neuen Zeichenspur jeweils beispielsweise eine Ortsnamensuche in einer Navigationsdatenbank durchgeführt bzw. nach der Eingabe weiterer Zeichen verfeinert. Die Trefferliste wird dann aus den zu den unterschiedlichen Erkennungsergebnissen gefundenen Datenbankeinträgen gebildet. In der Trefferliste werden bevorzugt bei den einzelnen Treffern diejenigen Wortbestandteile besonders hervorgehoben (z.B. farblich oder durch Unterstreichen), auf die das System anhand der Handschrifteingabe gematched hat, also eine Übereinstimmung erkannt hat.

Eine einzelne Zeichenspur muss nicht für ein ganzes Wort stehen. Die Zeichenerkennung kann bereits nach Eingabe jeweils einer Zeichenspur eines einzelnen Zeichens, also eines Buchstabens, einer Zahl oder auch eines Sonderzeichens (z.B. , ; - ! ?), oder aber auch einer Zeichenspur einer Zeichengruppe aus mehreren Zeichen durchgeführt werden. Diese Zeichengruppe muss dabei nicht ein vollständiges Wort sein. So kann der Benutzer z.B. drei Zeichen nacheinander als eine Zeichenspur zeichnen, bevor die Zeichenerkennung für diese Zeichenspur beginnt. Die Zeichenspur muss nicht aus nur einem einzigen Strich bestehen.

Der Benutzer kann also buchstabenweise beispielsweise ein Wort oder eine Telefonnummer eingeben, wobei dann die Trefferliste nach Eingabe jeder Zeichenspur verändert wird. Mit anderen Worten werden durch die Erfassungseinrichtung bevorzugt mehrere Zeichenspuren nacheinander erfasst und hierbei nach dem Erfassen jeder der Zeichenspuren jeweils zunächst eine Zeichenerkennung zur aktuellen Zeichenspur durchgeführt und anschließend auf der Grundlage der Erkennungsergebnisse aller bisher erfassten Zeichenspuren die Datenbanksuche präzisiert, d.h. die Anzahl der gefundenen Datenbankeinträge wird mit jedem weiter eingegeben Zeichen nach Möglichkeit verringert. Indem nach Eingabe jeder Zeichenspur die Datenbanksuche weiter präzisiert wird, erkennt der Benutzer in vorteilhafter Weise, welches Zeichen von dem Handschriftenerkennungssystem als mehrdeutig erkannt wird.

Gemäß einer Ausführungsform des Verfahrens wird dabei die Datenbanksuche jeweils begonnen, sobald nach dem Erfassen der Zeichenspur ein vorbestimmtes Kriterium erfüllt ist. So kann beispielsweise vorgesehen sein, die Datenbanksuche zu beginnen, sobald der Benutzer ein Zeicheninstrument, also beispielsweise einen Finger oder einen Eingabestift, von der Eingabefläche abgehoben hat. Ein anderes geeignetes Kriterium besagt, dass für eine vorbestimmte Zeitdauer die Zeichenspur unverändert geblieben sein muss. Die Verwendung eines Kriteriums für den Beginn der Datenbanksuche weist den Vorteil auf, dass durch geeignete Kriterien festgelegt werden kann, wann die von der Anzeigeeinrichtung erzeugte Anzeige verändert wird. Geschieht dies zu früh, wird der Benutzer beim Zeichnen der Zeichenspur irritiert.

Mit Zeichen auf der Eingabefläche ist im Zusammenhang mit der Erfindung nicht gemeint, dass der Benutzer einen Strich mit einer Farbe malt. Vielmehr ist es ausreichend, wenn der Benutzer beispielsweise mit einem Finger über eine berührungsempfindliche Eingabefläche eines Touchpads, eines Touchscreens oder einer vergleichbaren Sensoranordnung streicht, welche beispielsweise kapazitiv oder optisch die von beispielsweise der Fingerkuppe zurückgelegte Bahn oder Trajektorie erfasst.

Bei der Suche in der Datenbank muss anders als im Stand der Technik nicht zwingend davon ausgegangen werden, dass die eingegebenen Zeichen den Beginn eines Wortes oder einer Telefonnummer, oder allgemein eines Datenbankeintrages, bilden. Durch das Übereinstimmungskriterium, welches bei der Suche in der Datenbank zugrundegelegt wird, kann zwar auch eine solche Präfixsuche festgelegt sein, zusätzlich oder alternativ dazu können aber auch eine Infixsuche (die bisher eingegebene Zeichenfolge kann sich auch innerhalb eines Wortes befinden) und/oder eine Suffixsuche (die Zeichenfolge beschreibt das Wortende) festgelegt sein. Im Zusammenhang mit dem erfindungsgemäßen Verfahren hat sich herausgestellt, dass es problemlos möglich ist, den Suchbereich in einer Datenbank durch eine Infixsuche und eine Suffixsuche um ein Vielfaches zu vergrößern, ohne dass ein Benutzer durch eine große Zahl der gefundenen Datenbankeinträge verwirrt wird. Indem weiterhin die Original-Handschrift auf der Anzeigeeinrichtung angezeigt wird, bleibt selbst bei mehrdeutigen Zeichenspuren für den Benutzer erkennbar, wie sich die in der Trefferliste angezeigten Informationen ergeben haben.

Um eine Handschrifterkennungseinrichtung, wie sie aus dem Stand der Technik an sich bekannt ist, dahingehend weiterzubilden, dass sie im Sinne des erfindungsgemäßen Verfahrens zu einer einzelnen Zeichenspur mehrere unterschiedliche Erkennungsergebnisse ermitteln kann, sieht eine Ausführungsform des erfindungsgemäßen Verfahrens vor, durch die Handschrifterkennungseinrichtung zu mehreren möglichen Erkennungsergebnissen jeweils einen Erkennungswert zu ermitteln, welcher ein Maß für eine Übereinstimmung der Zeichenspur mit einem jeweiligen, möglichen Erkennungsergebnis darstellt. Ein solcher Erkennungswert ist im Zusammenhang mit der Mustererkennung eine an sich bekannte Größe. Beispielsweise kann bei einer Handschriftenerkennung auf Grundlage von Hidden-Markov-Modellen (HMM) ein Likelihoodwert oder ein Log-Likelihoodwert ermittelt werden. Gemäß dem Stand der Technik gibt das Handschrifterkennungssystem dann dasjenige mögliche Erkennungsergebnis als das Endergebnis aus, für welches das Maß die größte Übereinstimmung anzeigt.

Es werden nun die Erkennungswerte für mehrere mögliche Erkennungsergebnisse zugänglich gemacht. So kann gezielt nach denjenigen möglichen Erkennungsergebnissen gesucht werden, deren Erkennungswert anzeigt, dass die Übereinstimmung zumindest größer als ein vorbestimmtes Mindestmaß ist. Bei einer Zeichenspur für beispielsweise einen Buchstaben kann also nicht nur nach dem ähnlichsten Buchstaben, sondern es können die zwei oder drei ähnlichsten Buchstaben als Erkennungsergebnis ermittelt werden, die die größte Übereinstimmung mit der vorgegebenen Zeichenspur aufweisen. In den obigen Beispielen würden also zu einem vertikalen Strich I nicht nur beispielsweise der Großbuchstabe I, sondern auch der Kleinbuchstabe I und die Zahl 1 ausgegeben werden, wenn man die drei ähnlichsten Erkennungsergebnisse wählen würde.

Wie bereits eingangs ausgeführt, gehört zu der Erfindung auch eine Eingabevorrichtung für ein elektronisches Gerät eines Kraftwagens. Diese ist dazu eingerichtet, eine Ausführungsform des erfindungsgemäßen Verfahrens durchzuführen.

Der ebenfalls bereits genannte erfindungsgemäße Kraftwagen zeichnet sich durch eine Ausführungsform der erfindungsgemäßen Eingabevorrichtung aus, die in dem Kraftwagen bereitgestellt ist. In dem erfindungsgemäßen Kraftwagen ist dabei die Eingabevorrichtung bevorzugt zum Bedienen eines Navigationsgeräts und/oder eines Infotainmentsystems und/oder eines Mobilfunksystems des Kraftwagens ausgelegt. Damit kann ein Benutzer des Kraftwagens in vorteilhafter Weise über die Eingabevorrichtung in einer Navigationsdatenbank beispielsweise einen Ortsnamen, in einem Infotainmentsystem beispielsweise einen Musiktitel und in einem Mobilfunksystem eine Telefonnummer oder den Namen aus einem Adressbuch durch handschriftliche Eingabe zumindest eines Bestandteils des Suchbegriffes heraussuchen.

Im Folgenden werden Aspekte der Erfindung noch einmal genauer anhand eines konkreten Ausführungsbeispiels erläutert.

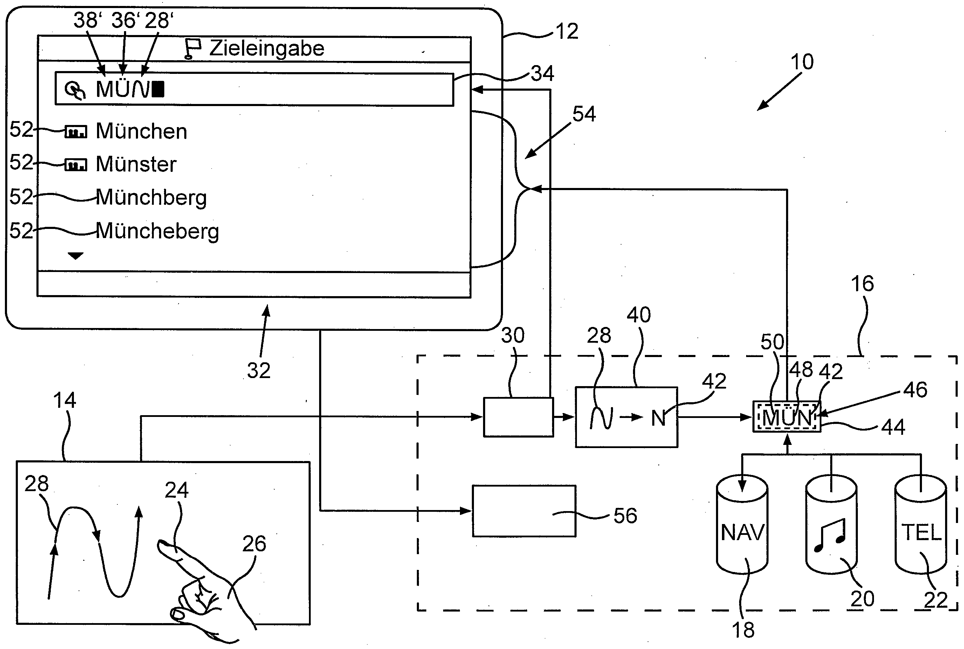

Dazu zeigt die einzige Figur (Fig.) eine Eirigabevorrichtung 10, die eine bevorzugte Ausführungsform der erfindungsgemäßen Eingabevorrichtung darstellt. Die Eingabevorrichtung 10 kann beispielsweise in einem Kraftwagen, insbesondere einem Personenkraftwagen, eingebaut sein. Die Eingabevorrichtung 10 kann eine Anzeigeeinrichtung 12, beispielsweise einen Bildschirm mit zugehöriger elektronischer Steuerung, eine Eingabefläche 14, beispielsweise ein Touchpad oder eine auf kapazitiver oder optischer Erfassung beruhendes Zeichenfeld, und ein Steuergerät 16 umfassen. Anstelle des in der Figur gezeigten einzelnen Steuergeräts 16 kann auch ein Verbund mehrerer Steuergeräte bereitgestellt sein. Das Steuergerät 16 kann beispielsweise Bestandteil eines Infotainmentsystems der Kraftwagens sein.

In dem der Figur zugrundeliegenden Beispiel möchte ein Benutzer für eine bevorstehende Fahrt ein Navigationsziel festlegen. Hierzu möchte er aus einer Navigationsdatenbank 18 einen Ortsnamen des Navigationsziels heraussuchen. Die Navigationsdatenbank 18 kann in dem Steuergerät 16 bereitgestellt sein. Die Navigationsdatenbank 18 kann dabei mit weiteren Datenbanken, beispielsweise einer Musikdatenbank 20 und/oder einer Adress/Telefonnummerdatenbank 22 bereitgestellt sein. Für die Suche des Ortsnamens streicht der Benutzer mit einem Finger 24 einer Hand 28 über die Eingabefläche 14 und zeichnet so eine Zeichenspur 28 auf der Eingabefläche 14. Die Sensoren der Eingabefläche 14 erfassen die Zeichenspur 28 und übertragen entsprechende Signale an eine Auswerteeinrichtung 30 des Steuergeräts 16, welche die Signale auswerten. Die Auswerteeinrichtung 30 und die Eingabefläche 14 bilden zusammen eine Erfassungseinrichtung für die Zeichenspur 28.

Auf der Anzeigeeinrichtung 12 wird während der Eingabe eine Anzeige 32 erzeugt, die ein Handschriftfeld 34 umfassen kann, in welcher ein Abbild 28' der Zeichenspur 28 zusammen mit Abbildern 36', 38' von zuvor erfassten Zeichenspuren in der Reihenfolge ihrer Eingabe dargestellt sein können. Die von der Auswerteeinrichtung 30 aus den Sensorsignalen des Berührungsfelds 14 erzeugten Daten der aktuellen Zeichenspur 28 werden nicht nur an die Anzeigeeinrichtung 12, sondern auch an eine Handschrifterkennung 40 übertragen.

Der folgende Aspekt betrifft ein nicht beanspruchtes Verfahren. Die Handschrifterkennung 40 führt zu der aktuellen Zeichenspur 28 eine Handschrifterkennung durch und erkennt in dem vorliegenden Beispiel in der Zeichenspur 28 den Buchstaben "N". Der erkannte Buchstabe bildet das hier eindeutige Erkennungsergebnis 42 der Handschrifterkennung zu der Zeichenspur 28. Das Erkennungsergebnis 42 wird an eine Sucheinrichtung 44 für eine Datenbanksuche weitergeleitet.

Die Sucheinrichtung 44 ist mit den Datenbanken 18, 20, 22 gekoppelt und dazu ausgelegt, in den Datenbanken 18, 20, 22 zumindest einen Datenbankeintrag zu finden, welcher einen Bestandteil aufweist, der mit einer Suchzeichenkette 46 übereinstimmt, die aus den bisher erkannten Zeichen gebildet ist. Die Suchzeichenkette 46 ist in dem gezeigten Beispiel aus dem aktuellen Erkennungsergebnis 42 sowie den zu den vorangegangenen Zeichenspuren erkannten Erkennungsergebnissen 48, 50 gebildet. In der in der Figur gezeigten Situation wurden bereits die Buchstabenfolge "MÜN" erkannt. In dem vorliegenden Beispiel ist die Datenbanksuche dazu konfiguriert, ausschließlich in der Navigationsdatenbank 18 zu suchen. Die Datenbanksuche 44 findet eine Vielzahl von Datenbankeinträgen, die mit der Suchzeichenkette 46, hier also "MÜN", gemäß einem eingestellten Suchkriterium, hier eine Präfixsuche, übereinstimmen.

Die gefundenen Datenbankeinträge 52 werden von der Sucheinrichtung 44 an die Anzeigeeinrichtung 12 übertragen. Die Anzeigeeinrichtung 12 stellt die gefundenen Datenbankeinträge 52 als eine Trefferliste 54 dar. Für den Fall, dass sich der gesuchte Ortsname unter den gefundenen und in der Trefferliste 54 angezeigten Datenbankeinträgen 52 befindet, kann der Benutzer den gesuchten Ortsnamen direkt z.B. durch Antippen auswählen, so dass durch ein Steuerungsmodul 56 das Navigationsgerät des Kraftwagens entsprechend für die Navigation auf der Grundlage des ausgewählten Ortsnamens konfiguriert werden kann. Andernfalls kann der Benutzer eine weitere Zeichenspur eingeben, um hierdurch die Datenbanksuche zu präzisieren.

Bei den gezeigten Komponenten des Steuergeräts 16, also der Auswerteeinrichtung 30, der Handschrifterkennung 40, der Sucheinrichtung 44 und dem Steuermodul 56 kann es sich beispielsweise um Programmmodule handeln, welche Bestandteil eines Betriebsprogramms des Steuergeräts 16 sein können. Bei der Handschrifterkennung 40 kann es sich um einen an sich aus dem Stand der Technik bekannten Erkennungsalgorithmus handeln. Die Datenbanksuche durch die Sucheinrichtung 44 kann ebenfalls mittels eines an sich bekannten Suchalgorithmus realisiert sein.

Durch das Beispiel ist gezeigt, wie unter Berücksichtigung des Kontextes (hier einer Suche ausschließlich in der Navigationsdatenbank 18) weiterhin eine intuitive zu verstehende Anzeige erzeugt werden kann, in welcher dem Benutzer veranschaulicht wird, wie durch eine Eingabeeinrichtung seine handschriftliche Eingabe interpretiert wird. Einfache und schnellere Eingaben sind hierdurch möglich, da keine manuelle Disambiguierung durch den Benutzer notwendig ist, d.h. der Benutzer muss nicht darauf achten, ob das System tatsächlich den von ihm eingegebenen Buchstaben erkannt hat. Eine automatische Disambiguierung durch die Handschrifterkennung 40 ist ebenfalls nicht nötig. Gibt der Benutzer beispielsweise eine Null ("0") ein und wird durch die Handschrifterkennung 40 hierbei neben der Null ("0") auch ein Großbuchstabe O erkannt, so kann durch die Datenbanksuche 44 sowohl auf der Grundlage einer Suchzeichenkette mit einer 0 als auch auf Grundlage einer Suchzeichenkette mit einem Großbuchstaben O die Suche durchgeführt werden und die so gefundenen Datenbankeinträge insgesamt in die Trefferliste 46 aufgenommen werden. Durch die dabei beibehaltene Anzeige der Fingerspur auch nach der Durchführung der Zeichenerkennung hat der Benutzer ein klares und eindeutiges Feedback zu dem, was er eingegeben hat. Dem Benutzer ist durch die Anzeige der Zeichenspur verständlich, warum beispielsweise als Ergebnis in einer Trefferliste auch Einträge mit einer 1, einem Großbuchstaben I und dem Großbuchstaben J stehen, wenn er einen vertikalen Strich I zeichnet. Auch ein akustisches Feedback ist nicht nötig, so dass darauf ebenfalls verzichtet werden kann.

## Patentansprüche

1. Verfahren zum Betreiben einer Eingabevorrichtung (10) für ein elektronisches Gerät eines Kraftwagens, wobei die Eingabevorrichtung (10) eine Anzeigeeinrichtung (12), eine Eingabefläche (14) und entweder ein Steuergerät (16) oder einen Verbund aus mehreren Steuergeräten umfasst, wobei durch das Steuergerät (16) oder den Verbund aus Steuergeräten mindestens eine Datenbank (18, 20, 22), eine Auswerteeinrichtung (30), eine Handschrifterkennung (40) und eine Sucheinrichtung (44) bereitgestellt sind und wobei:
- durch eine durch die Eingabefläche (14) und die Auswerteeinrichtung (30) gebildete Erfassungseinrichtung (14, 30) eine Zeichenspur (28) eines Benutzers (26) erfasst wird, während dieser die Zeichenspur (28) zum Eingeben eines Zeichens (42) oder einer Zeichengruppe auf der Eingabefläche (14) der Erfassungseinrichtung (14, 30) zeichnet,
- durch die Handschrifterkennungseinrichtung (40) eine Zeichenerkennung zu der erfassten Zeichenspur (28) durchgeführt wird, wobei durch die Handschrifterkennungseinrichtung (40) zu der Zeichenspur (28) mehrere unterschiedliche Erkennungsergebnisse (42) ermittelt werden, und
- durch die Anzeigeeinrichtung (12) eine Anzeige zu einem Ergebnis (42) der Erkennung erzeugt wird,
**dadurch gekennzeichnet, dass**
- die zumindest eine Datenbank (18, 20, 22) eine Navigationsdatenbank und/oder eine Musikdatenbank (20) und/oder eine Adress-/Telefonnummerdatenbank (22) umfasst und
- durch die Sucheinrichtung (44) mittels einer Datenbanksuche (44) in der zumindest einen Datenbank (18, 20, 22) zu jedem der unterschiedlichen Erkennungsergebnisse (42) zumindest ein Datenbankeintrag (52) gesucht wird, welcher ein Übereinstimmungskriterium bezüglich des Erkennungsergebnisses (42) erfüllt, und
- durch die Anzeigeeinrichtung (12) als das Ergebnis der Erkennung eine auf der Grundlage der unterschiedlichen Erkennungsergebnisse gebildete Trefferliste (54) angezeigt wird, wobei die Trefferliste (54) aus gefundenen Datenbankeinträgen (52) gebildet wird, und nach der Durchführung der Zeichenerkennung zusammen mit der zu dem Ergebnis der Erkennung erzeugten Anzeige auch die Zeichenspur (28) angezeigt wird, so dass dem Benutzer klar wird, mit welchem der eingegebenen Zeichen die Handschrifterkennung dahingehend Schwierigkeiten hatte, dass die Zeichenspur mehrdeutig ist und deshalb mehrere unterschiedliche Erkennungsergebnisse möglich sind.

2. Verfahren nach Anspruch 1, wobei die Datenbanksuche begonnen wird, sobald nach dem Erfassen der Zeichenspur (28) ein vorbestimmtes Kriterium erfüllt ist, insbesondere sobald der Benutzer (26) ein Zeicheninstrument (24) von der Eingabefläche (14) abgehoben hat und/oder für eine vorbestimmte Zeitdauer die Zeichenspur (28) unverändert geblieben ist.

3. Verfahren nach einem der vorhergehenden Ansprüche, wobei durch die Erfassungseinrichtung (14, 30) mehrere Zeichenspuren (28) nacheinander erfasst werden und hierbei nach dem Erfassen jeder der Zeichenspuren jeweils a) eine Zeichenerkennung zur aktuellen Zeichenspur (28) durchgeführt wird und b) auf der Grundlage der zu mehreren bisher erfassten Zeichenspuren (28) ermittelten Erkennungsergebnissen (42, 48, 50) die Datenbanksuche präzisiert wird.

4. Verfahren nach einem der vorhergehenden Ansprüche, wobei durch das Übereinstimmungskriterium eine Präfixsuche und/oder Infixsuche und/oder Suffixsuche festgelegt ist.

5. Verfahren nach einem der vorhergehenden Ansprüche, wobei durch die Handschrifterkennungseinrichtung zu mehreren möglichen Erkennungsergebnissen ein Erkennungswert ermittelt wird, welcher ein Maß für eine Übereinstimmung der Zeichenspur mit dem möglichen Erkennungsergebnis darstellt, und als die unterschiedlichen Erkennungsergebnisse diejenigen möglichen Erkennungsergebnisse ausgewählt werden, deren Erkennungswert anzeigt, dass die Übereinstimmung größer als ein vorbestimmtes Mindestmaß ist.

6. Eingabevorrichtung (10) für ein elektronisches Gerät eines Kraftwagens, welche dazu eingerichtet ist, ein Verfahren nach einem der vorhergehenden Ansprüche durchzuführen.

7. Kraftwagen mit einer Eingabevorrichtung (10) nach Anspruch 6.

8. Kraftwagen nach Anspruch 7, wobei die Eingabevorrichtung (10) zum Bedienen eines Navigationsgeräts und/oder eines Infotainmentsystems und/oder eines Mobilfunksystems des Kraftwagens ausgelegt ist.

## Claims

1. Method for operating an input device (10) for an electronic apparatus in a motor vehicle, wherein the input device (10) comprises a display device (12), an input surface (14) and either a controller (16) or a group comprising a plurality of controllers, wherein at least one database (18, 20, 22), an evaluation device (30), a handwriting recognition device (40) and a search device (44) are provided by the controller (16) or the group of controllers, and wherein:
- a sensing device (14, 30) formed by the input surface (14) and the evaluation device (30) senses a character trace (28) from a user (26) while said user draws the character trace (28) in order to input a character (42) or a group of characters on the input surface (14) of the sensing device (14, 30),
- the handwriting recognition device (40) performs character recognition for the character trace (28) sensed by the sensing device, wherein the handwriting recognition device (40) determines a plurality of different recognition results (42) for the character trace (28), and
- the result (42) of the character recognition is displayed by the display device (12),
**characterised in that**
- the at least one database (18, 20, 22) comprises a navigation database and/or a music database (20) and/or an address/telephone number database (22) and
- the search device (44) uses a database search (44) in the at least one database (18, 20, 22) to search for at least one database entry (52) for each of the different recognition results (42), which satisfies a match criterion for the recognition result (42), and
- the display device (12) displays a hits list (54) formed on the basis of the different recognition results as the result of the recognition, wherein the hits list (54) is formed from database entries (52) that are found, and following the performance of the character recognition, the character trace (28) is also displayed together with the display produced for the result of the recognition, so that it becomes clear to the user which of the input characters the handwriting recognition section had difficulties with to the effect that the character trace is ambiguous and therefore a plurality of different recognition results are possible.

2. Method according to claim 1, wherein the database search is started as soon as a predetermined criterion is satisfied following the sensing of the character trace (28), in particular as soon as the user (26) has lifted a drawing instrument (24) from the input surface (14) and/or as soon as the character trace (28) has remained unchanged for a predetermined period of time.

3. Method according to any one of the preceding claims, wherein the sensing device (14, 30) senses in succession a plurality of character traces (28) and at this juncture after sensing of each character trace a) character recognition is performed on the current character trace (28) and b) the database search is refined more precisely based on the recognition results (42, 48, 50) determined for the plurality of previously sensed character traces (28).

4. Method according to any one of the preceding claims, wherein a prefix search and/or infix search and/or suffix search is stipulated by the match criterion.

5. Method according to any one of the preceding claims, wherein the handwriting recognition device determines a recognition value for a plurality of potential recognition results that is a measure of a match between the character trace and a potential recognition result, and as the different recognition results of these potential recognition results are selected, displays their recognition value that the match is greater than a predetermined minimum.

6. Input device (10) for an electronic apparatus in a motor vehicle, which is set up to carry out a method according to any one of the preceding claims.

7. Motor vehicle having an input device (10) according to claim 6.

8. Motor vehicle according to claim 7, wherein the input device (10) is configured for operator control of a navigation apparatus and/or an infotainment system and/or a mobile radio system of the motor vehicle.

## Revendications

1. Procédé pour le fonctionnement d'un dispositif d'entrée (10) pour un appareil électronique d'un véhicule automobile, le dispositif d'entrée (10) comprenant un système d'affichage (12), une surface d'entrée (14) et soit un appareil de commande (16) soit une combinaison de plusieurs appareils de commande, au moins une base de données (18, 20, 22), un système d'évaluation (30), un élément de reconnaissance d'écriture manuscrite (40) et un système de recherche (44) étant mis à disposition par l'appareil de commande (16) ou par la combinaison d'appareils de commande et
- un tracé de caractères (28) d'un utilisateur (26) étant détecté par un système de détection (14, 30) formé par la surface d'entrée (14) et par le système d'évaluation (30) alors que ledit utilisateur dessine le tracé de caractères (28) pour entrer un caractère (42) ou un groupe de caractères sur la surface d'entrée (14) du système de détection (14, 30),
- l'élément de reconnaissance d'écriture manuscrite (40) effectuant une reconnaissance de caractère pour le tracé de caractères (28) détecté, l'élément de reconnaissance d'écriture manuscrite (40) déterminant pour le tracé de caractères (28) plusieurs résultats de reconnaissance (42) différents, et
- le système d'affichage (12) produisant un affichage pour un résultat (42) de la reconnaissance,
**caractérisé en ce que**
- l'au moins une base de données (18, 20, 22) comprend une base de données de navigation et/ou une base de données de musique (20) et/ou une base de données d'adresses et de numéros de téléphones (22), et
- le système de recherche (44) cherche au moyen d'une recherche de base de données (44) dans l'au moins une base de données (18, 20, 22), pour chacun des résultats de reconnaissance (42) différents, au moins un enregistrement de base de données (52), qui remplit un critère de concordance par rapport au résultat de reconnaissance (42), et
- le système d'affichage (12) affiche comme résultat de la reconnaissance une liste de réponses pertinentes (54) formée sur la base des différents résultats de reconnaissance, la liste de réponses pertinentes (54) étant formée à partir d'enregistrements de base de données (52) trouvés et, après la mise en oeuvre de la reconnaissance de caractère, le tracé de caractères (28) étant également affiché conjointement avec l'affichage produit pour le résultat de la reconnaissance de telle sorte que l'utilisateur voit ainsi clairement avec lequel des caractères entrés la reconnaissance d'écriture manuscrite a eu des difficultés du fait que le tracé de caractères a plusieurs significations et que plusieurs résultats de reconnaissance différents sont donc possibles.

2. Procédé selon la revendication 1, dans lequel on commence la recherche dans la base de données dès qu'un critère prédéterminé est rempli après la détection du tracé de caractères (28), notamment dès que l'utilisateur (26) a retiré de la surface d'entrée (14) un instrument de dessin (24) et/ou dès que le tracé de caractères (28) est resté inchangé pendant un temps prédéterminé.

3. Procédé selon l'une des revendications précédentes, dans lequel le système de détection (14, 30) détecte successivement plusieurs tracés de caractères (28) et à chaque fois, après la détection de chacun des tracés de caractères, a) on effectue alors une reconnaissance de caractère pour le tracé de caractères (28) effectif et b) on précise la recherche de base de données sur la base des résultats de reconnaissance (42, 48, 50) déterminés pour plusieurs tracés de caractères (28) détectés jusqu'alors.

4. Procédé selon l'une des revendications précédentes, dans lequel une recherche de préfixe et/ou une recherche d'infixe et/ou une recherche de suffixe est spécifiée par le critère de concordance.

5. Procédé selon l'une des revendications précédentes, dans lequel l'élément de reconnaissance d'écriture manuscrite détermine pour plusieurs résultats de reconnaissance possibles une valeur de reconnaissance représentant une mesure pour une concordance du tracé de caractères avec le résultat de reconnaissance possible et on choisit comme résultats de reconnaissance différents les résultats de reconnaissance possibles précisément dont la valeur de reconnaissance indique que la concordance est plus grande qu'une valeur minimale prédéterminée.

6. Dispositif d'entrée (10) pour un appareil électronique d'un véhicule automobile, lequel dispositif d'entrée est configuré pour mettre en oeuvre un procédé selon l'une des revendications précédentes.

7. Véhicule automobile comprenant un dispositif d'entrée (10) selon la revendication (6).

8. Véhicule automobile selon la revendication 7, dans lequel le dispositif d'entrée (10) est mis au point pour commander un appareil de navigation et/ou un système d'infodivertissement et/ou un système de radiocommunication mobile du véhicule automobile.
